# EUROPEAN PATENT APPLICATION

(11) **EP 2 230 598 A2**
(43) Date of publication of application: **22.09.2010**
(21) Application number: 10250205.1
(22) Date of filing: 08.02.2010
(51) Int. Cl.: G06F 9/445

(54) **Information processing apparatus, information processing method, and information processing program**

(30) Priority: 17.03.2009 JP 2009065295
(71) Applicant: Ricoh Company, Ltd., Tokyo 143-8555 (JP)
(72) Inventor: Ogura, Yoshihiro, Yokohama-shi Kanagawa (JP); Yoshida, Tomoki, Yokohama-shi Kanagawa (JP); Maeda, Shunichi, Matsudo-shi Chiba (JP); Hiroshi, Kobayashi, Kawasaki-shi Kanagawa (JP); Keisuke, Tsukada, Tokyo (JP)
(74) Representative: Mounteney, Simon James

(57) **Abstract**

An information processing apparatus on which plural software packages are installed includes an installing unit for installing an installing software package as the plural software packages, a software updating unit for updating the plural software packages with an updating software package, and a dependency relationship determination unit for determining existence or non-existence of a dependency relationship between the installing software package or one of the plural software packages that is to be updated by the updating software package and any one of the plural software packages that is running by whether the installing software package or the one of the plural software packages to be updated uses the processing result of the any one of the plural software packages that is running. When the non-existence is determined, the installing unit installs the installing software package or the one of the plural software packages is updated.

## Description

### BACKGROUND OF THE INVENTION

### 1. Field of the Invention

The present invention generally relates to a technique of installing and updating software in an information processing apparatus.

### 2. Description of the Related Art

Recently and continuing, there are increased occasions in which software is downloaded from a server provided by a manufacturer via a network and is installed initially or installed for updating software in an information processing apparatus such as a multifunctional peripheral (MFP).

For example, Patent Document 1 discloses a method of querying an owner of a job for permission to install software that is downloaded via a network by a multifunctional peripheral (MFP) and of acquiring consent of the owner to thereby prevent unintentional interruption and process delay of the job from occurring.

However, since the technique is about the prevention of the interruption and the process delay by acquiring the consent, there is a problem in that the consent is acquired when software to be provided for installing or software to be updated does not affect an idle job or an active job.

Patent Document 1: Japanese Unexamined Patent Application Publication No. 2006-092377

### SUMMARY OF THE INVENTION

Accordingly, an embodiment of the present invention provides a novel and useful information processing apparatus which allows the installation and updating of software confirmed not to affect the active or idle job, an information processing method used for this, and an information processing program used for this, solving one or more of the problems discussed above.

More specifically, the embodiments of the present invention may provide an information processing apparatus on which plural software packages are installed, and a processing result obtained by one package of the plural software packages is provided to be used by another package of the plural software packages, the information processing apparatus including an installing unit configured to install an installing software package on the information processing apparatus as a part of the plural software packages, a software updating unit configured to update the plural software packages with an updating software package, and a dependency relationship determination unit configured to determine existence of a dependency relationship between the installing software package or one of the plural software packages that is to be updated by the updating software package and any one of the plural software packages that is running when the installing software package or the one of the plural software packages that is to be updated by the updating software package uses the processing result of the any one of the plural software packages that is running, and non-existence of any dependency relationship when the installing software package or the one of the plural software packages that is to be updated by the updating software package does not use the processing result of the any one of the plural software packages that is running, whereby when the dependency relationship determination unit determines the non-existence of any dependency relationship, the installing unit installs the installing software package or the one of the plural software packages is updated by the updating software package.

Additional objects and advantages of the embodiments will be set forth in part in the description which follows, and in part will be obvious from the description, or may be learned by practice of the invention. Objects and advantages of the invention will be realized and attained by means of the elements and combinations particularly pointed out in the appended claims.

It is to be understood that both the foregoing general description and the following detailed description are exemplary and explanatory only and are not restrictive of the invention, as claimed.

### BRIEF DESCRIPTION OF THE DRAWINGS

A description is given below, with reference to the FIG. 1 through FIG. 9 of the embodiment of the present invention.
FIG. 1 is a functional block diagram of an information processing apparatus.
FIG. 2 illustrates an operations unit.
FIG. 3 illustrates a relationship between a sales package and function packages.
FIG. 4 illustrates an example of a process carried out by the information processing apparatus.
FIG. 5 illustrates an example of a process carried out by the information processing apparatus.
FIG. 6 illustrates an example of a process carried out by the information processing apparatus.
FIG. 7 illustrates an example of a process carried out by the information processing apparatus.
FIG. 8 is a flowchart illustrating a process carried out by the information processing apparatus.
FIG. 9 is a flowchart illustrating the process carried out by the information processing apparatus.

### DETAILED DESCRIPTION OF THE PREFERRED EMBODIMENTS

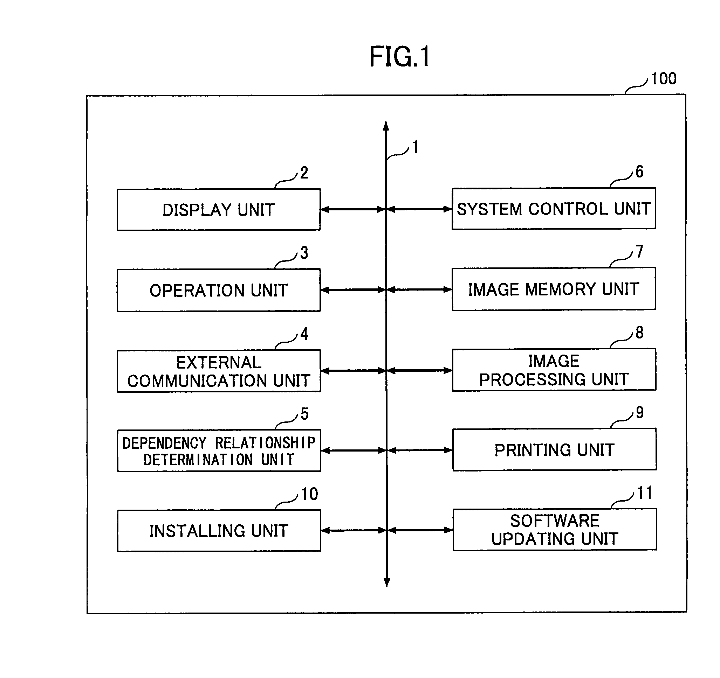

A description is given below, with reference to FIG. 1 through FIG. 9 of the embodiment of the present invention. In the embodiment, numerical references typically designate as follows: 1: internal bus; 2: display unit; 3: operations unit; 4: external communication unit; 5: dependency relationship determination unit; 6: system control unit; 7: image memory unit; 8: image processing unit; 9: printing unit; 10: installing unit; 11: software updating unit; and 100: information processing apparatus.

FIG. 1 is a block chart explaining entire control of an information processing apparatus 100. As illustrated in FIG. 1, the information processing apparatus 100 includes a display unit 2, an operations unit 3, an external communication unit 4, a dependency relationship determination unit 5, a system control unit 6, an image memory unit 7, an image processing unit 8, a printing unit 9, an installing unit 10, and a software updating unit 11.

The system bus 1 is a path which connects a plurality of units forming the system. The system control unit 6 includes a central processing unit (CPU) or the like, deploys a program stored in a nonvolatile memory onto a working area (e.g. RAM), and controls various units or the like in compliance with the program.

The display unit 2 displays various items on a screen based on display data input from the system control unit 6. The operations unit 3 includes a keyboard having various functional keys and transmits signals generated by keystroking to the system control unit 6. The external communication unit 4 communicates with a server positioned outside the information processing apparatus.

The dependency relationship determination unit 5 determines whether there is a dependency relationship between a function package included in a sales package downloaded from a server (component server) by the external communication unit 4 and a function package already installed in the information processing apparatus. The sales package is a sales unit and includes one or more function packages. Meanwhile, the function package is a minimum unit in installing a program or the like, and corresponds to a program component in a one-to-one relationship. Hereinafter, such a program component is basically referred to as "function package".

One of the dependency relationships designates a relationship in which a function package which is to be installed by the installing unit 10 or a function package which is to be updated by the software updating unit 11 uses a processing result obtained by a running or a ready and waiting function package in the information processing apparatus 100.

Another of the dependency relationships designates a relationship in which a function package which is being installed by the installing unit 10 or a function package which is being updated by the software updating unit 11 uses a processing result obtained by a requested function package which may be used by the information processing apparatus 100 based on a processing request requesting to use the requested function package.

Image data, print data or the like is stored in the image memory unit 7. The image processing unit 8 applies image-editing such as image expansion and reduction, rotation or the like to input images, and outputs the edited image to the printing unit 9. The printing unit 9 includes a photoconductive drum, toner, a paper ejecting unit, a paper feeding unit or the like. In compliance with a print instruction from the system control unit 6, the printing unit 9 feeds a printing paper from a paper feeding unit and exposes with light to form an image input from the image processing unit 9 as an latent image. Next, an image output unit transcripts toner to the latent image on exposed printing paper, and fixes the toner to it. Then, the printing paper is ejected from the paper ejecting unit.

The installing unit 10 installs a function package (software) on the information processing apparatus 100. The software updating unit 11 updates the function package (software) inside the information processing apparatus 100.

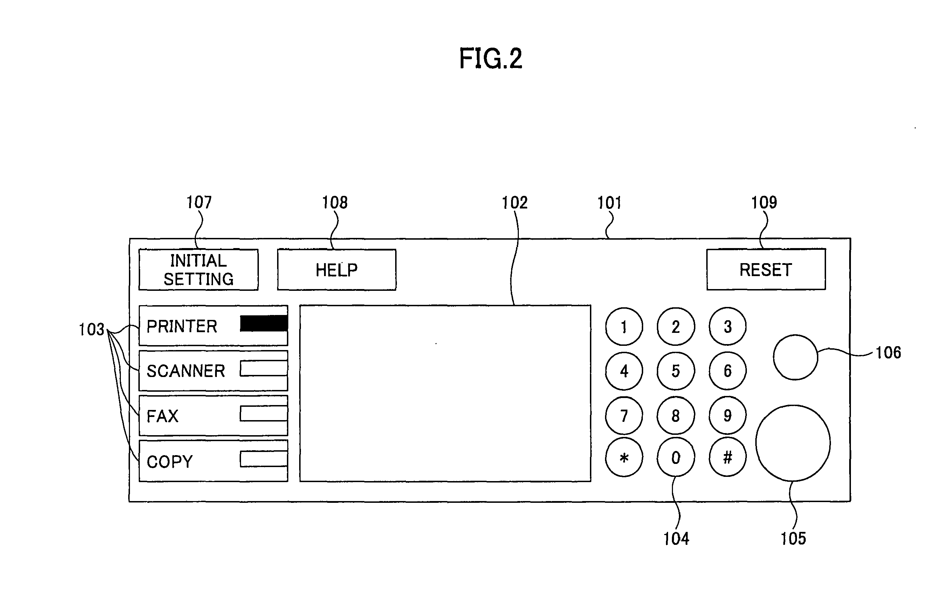

FIG. 2 illustrates the operations unit 3 and the display unit 2 of the information processing apparatus 100 of the embodiment. In FIG. 2, numerical reference 101 designates the operations unit 3, and numerical reference 102 designates the display unit 2. A character string or a bit map is displayed on the display unit 102. The display unit 102 may be a touch panel to enable directly inputting an instruction or the like. Numerical reference 103 designates keys for switching applications and may be used to switch among various functions such as copy, scan, fax, and print.

Numerical reference 104 designates a numeric keypad used for operation of numbers such as inputting numbers. Numerical reference 105 designates a start key used for instructing the information processing apparatus 100 to start operations of the various functions. Numerical reference 106 designates a clear stop key used to interrupt the various functions and to delete numerals once set. Numerical reference 107 designates an initial setup key and is used to set an initial value necessary for the various functions. Numerical reference 108 designates a Help key used to display Help information of various operations. Numerical reference 109 designates a reset key used to reset the operations of various functions.

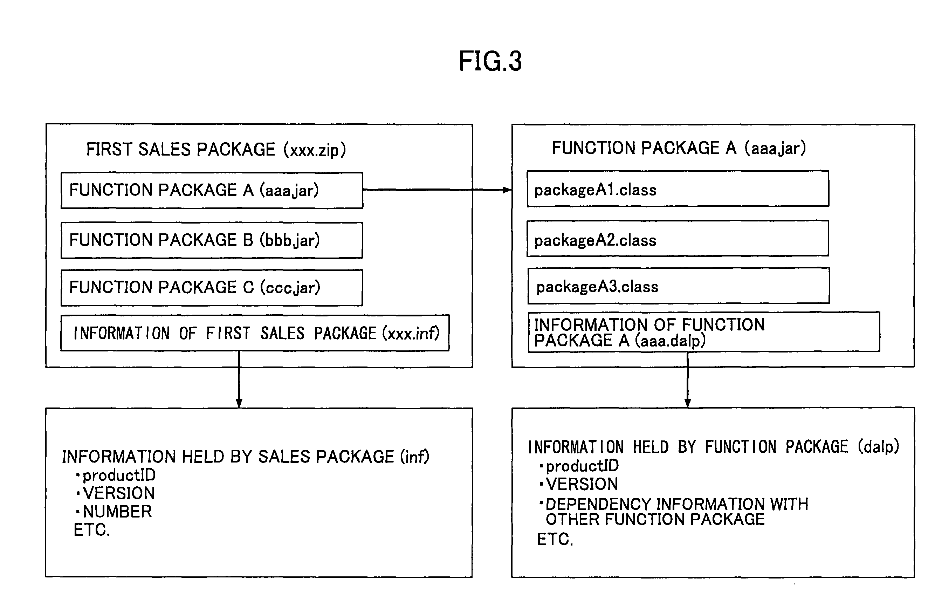

FIG. 3 illustrates a relationship between the sales package and the function package of the embodiment. Referring to FIG. 3, software downloaded by the external communication unit 4 is referred to as the sales package. The sales package includes the function packages corresponding to the various functions.

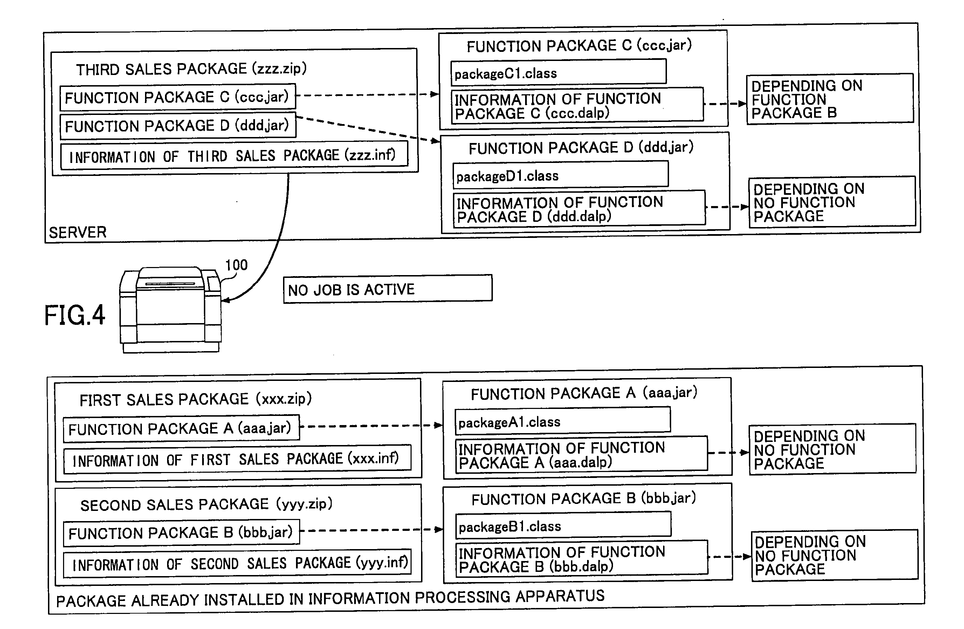

Referring to FIG. 4, an example of processing carried out by the dependency relationship determination unit 5 of the embodiment is described below. Described below is a case where an active job does not exist in the information processing apparatus 100.

When a third sales package is installed in the information processing apparatus 100 using a personal computer (PC) or the like connected to the network, the dependency relationship determination unit 5 checks dependency relationships of function packages C and D included in the third sales package after downloading the third sales package from a server. In order to determine the dependency relationships, the dependency relationship determination unit 5 acquires dependency package information described in information "dalp file" (e.g. ccc.dalp and ddd.dalp) of the function packages included in the sales package.

In an example illustrated in FIG. 4, the third sales package includes function package D without having the dependency relationship and function package C depending on function package B. Therefore, the dependency relationship determination unit 5 determines whether function package B is installed in the information processing apparatus 100. When it is determined that the function package B exists with the dependency relationship determination unit 5, the installing unit 10 installs the third sales package including the function package C.

In a case of updating software, a version of a function package already installed in the information processing apparatus and a version of a downloaded function package are compared. When the version of the downloaded function package is newer (later) than the version of the function package already installed, the version of the function package already installed is updated to the version of the downloaded function package.

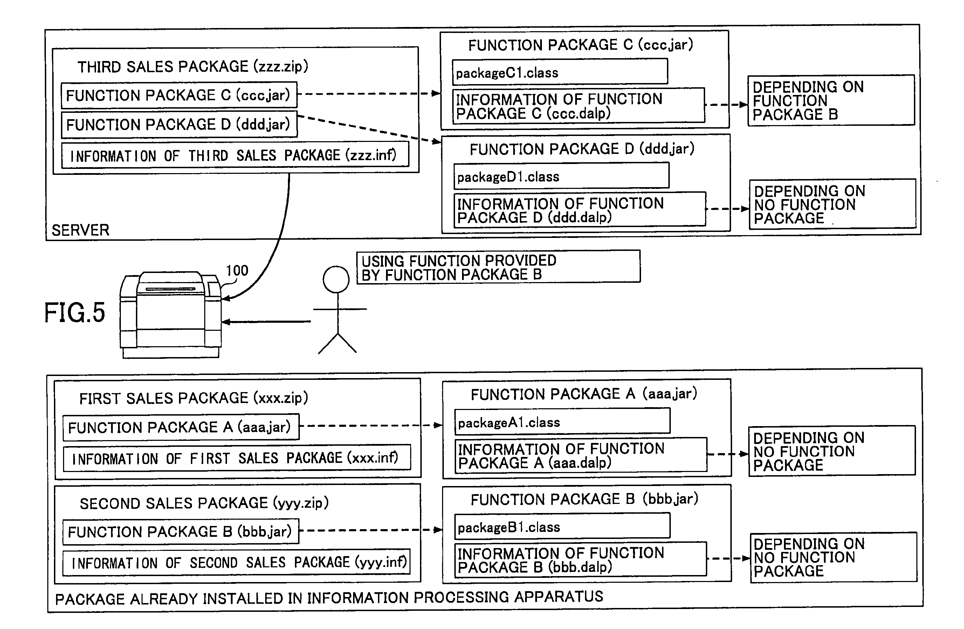

FIG. 5 illustrates another example of processing carried out by the dependency relationship determination unit 5 of the embodiment. Referring to FIG. 5, a case where a job having a dependency relationship with an object to be provided for installing is running in the information processing apparatus 100 is described below.

When the job is running in the information processing apparatus 100, the dependency relationship determination unit 5 determines the function package providing its function (e.g. function package B in FIG. 5) to the active job, and checks the dependency relationship of the function package C and the dependency relationship of function package D in a manner similar to that described with reference to FIG. 4. When it is determined that the function package C, which is an object to be provided for installing, depends on the running function package B providing its function, the installing unit 10 installs the function package C after completion of the active job. In a manner similar to the installing, software may be updated by the software updating unit 11 after the completion of the active job when it is determined by the dependency relationship determination unit 5 that the function package, which is depended on by a function package to be updated, is running as providing its function.

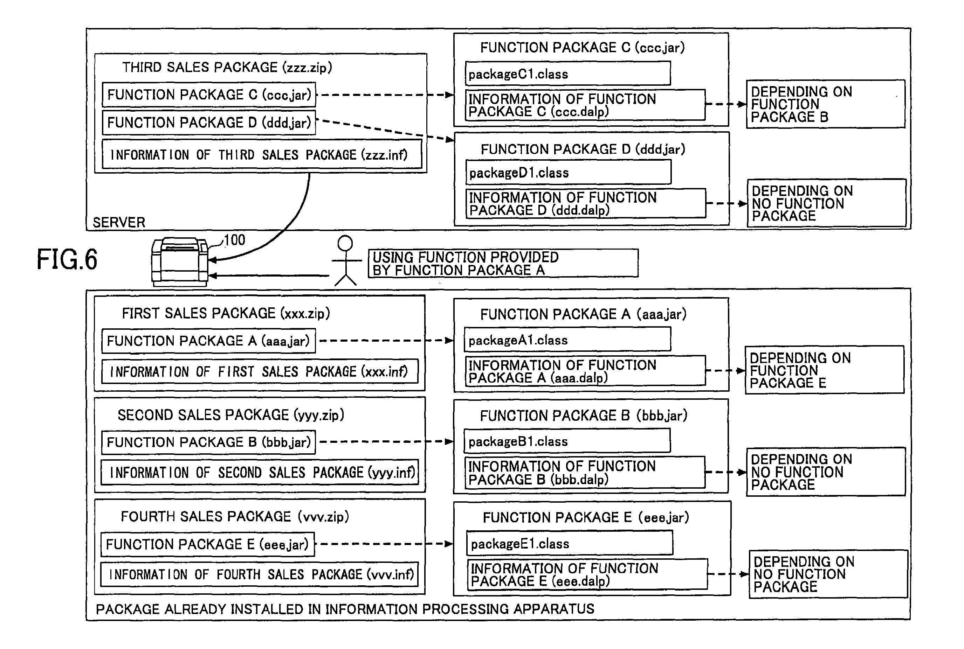

FIG. 6 illustrates another example of processing carried out by the dependency relationship determination unit 5 of the embodiment. Referring to FIG. 6, a case is described below where a job having no dependency relationship with an object to be provided for installing is running in the information processing apparatus 100.

When a job is active in the information processing apparatus 100, the dependency relationship determination unit 5 determines a function package providing its function to the active job (e.g. function package A in FIG. 6), and checks for existence of another function package further depended on by the determined function package A if the existence is anticipated. Referring to FIG. 6, function package A depends on function package E. After checking for a function package dependency relationship of the active job with the dependency relationship determination unit 5, the dependency relationship determination unit 5 checks a dependency relationship of function package C and function package D in a manner similar to the description with reference to FIG. 5,.

Although it is known by the dependency relationship determination unit 5 that the function package C, which is one of objects C and D to be provided for installing, depends on the function package B, since it is determined that the function package C does not depend on the function package A, the installing unit 10 installs the function package C. In this way, it is possible to install the function package C without affecting the active job. Meanwhile, the software updating unit 11 updates a function package when it is determined by the dependency relationship determination unit 5 that a function package, which is depended by the function package to be provided for updating, has no dependency relationship with an active function package as providing its function.

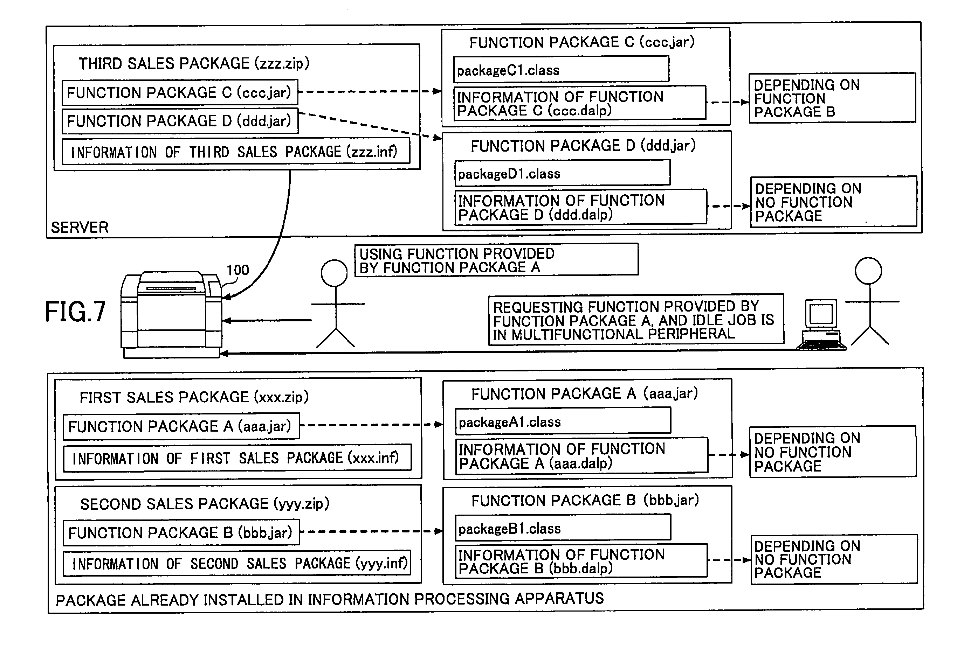

FIG. 7 illustrates another example of processing carried out by the dependency relationship determination unit 5 of the embodiment. Referring to FIG. 7, described below is a case where a job using a function provided by functional package A and having no dependency relationship with objects C and D to be provided for installing is active, and an idle job requesting a function provided by functional package A exists in the information processing apparatus 100.

FIG. 7 illustrates a case where an idle job requesting a function provided by functional package A exists in the information processing apparatus 100 in addition to the condition of FIG. 6. In this case, the dependency relationship determination unit 5 checks for a dependency relationship of function packages during the idle job in a manner similar to the checking during the active job. In the example illustrated in FIG. 7, because there is no dependency relationship between the idle job and the objects C and D to be provided for installing, the installing unit 10 installs the objects to be provided for installing.

On the other hand, when it is determined that there is the dependency relationship between the idle job and the object to be provided for installing, the installing unit 10 installs the function package after completion of the idle job. In a manner similar to the installing, the software updating unit 11 updates a function package when it is determined by the dependency relationship determination unit 5 that a function package, which is depended by the function package to be updated, has no dependency relationship with an running function package as providing its function or a ready and waiting function package.

When a version of the function package A already installed in the information processing apparatus 100 is the same as or older (later) than a version of function package A included in a sales package to be provided for installing or updating, the already installed function package A is not updated. On the contrary, when the version of function package A included in the sales package to be provided for installing or updated is newer (later) than the version of the function package A already installed in the information processing apparatus 100, the function package A is updated.

In this way, when the function package having the dependency relationship is included in the sales package to be provided for installing or updated (it is once determined not to install or update because the version of the function package is old), the sales package may be installed initially or installed for updating software such as a function package in an information processing apparatus.

The dependency relationship determination unit 5 may determine the function package used in the active job in the information processing apparatus 100 by inquiring whether all of the function packages installed in the information processing apparatus 100 are running at a timing when the information processing apparatus 100 receives a request for installing the sales package or updating with the sale package while there is an active job is being active. The dependency relationship determination unit 5 determines that the function package responding to the request is being used in the active job providing its function.

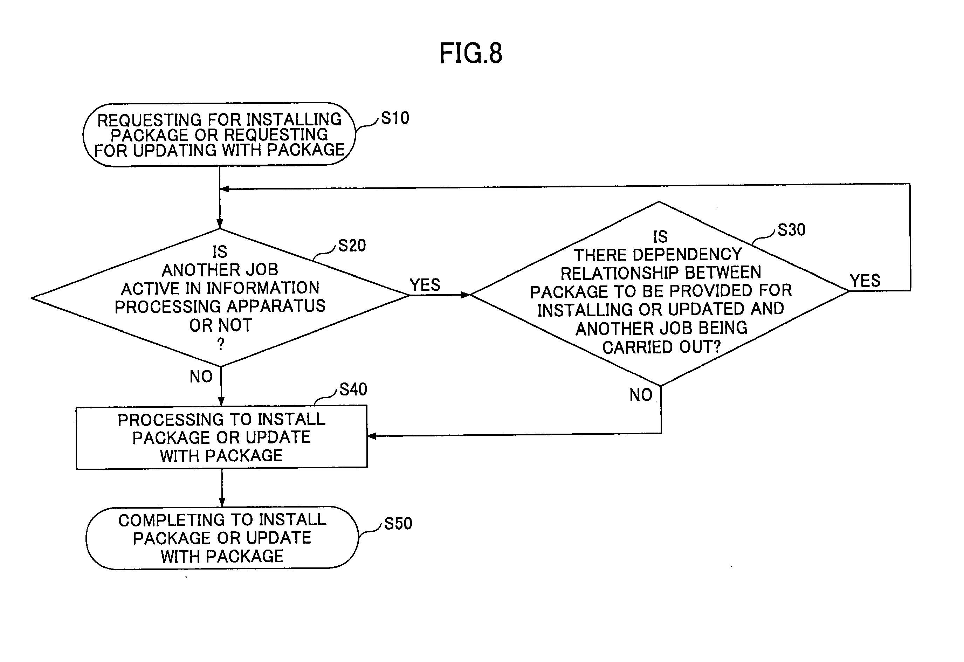

FIG. 8 is a flowchart for installing the function package or updating with the function package while the job is active. In step S10, the information processing apparatus 100 receives a request for installing a function package or a request for updating with the function package. In step S20, when the dependency relationship determination unit 5 receives the request for installing the function package or the request for updating with the function package, it is determined inside the information processing apparatus 100 whether another job is active.

In case of YES in step S20, the dependency relationship determination unit 5 determines in step S30 whether there is a dependency relationship between the function package to be provided for installing or updated and the active job. When it is determined that there is no dependency relationship the flow goes to step S40, and when it is determined that there is a dependency relationship, the flow goes back to step S20. In step S40, the installing unit 10 installs the function package or the software updating unit 11 updates with the function package. Although, in the embodiment, the function package having information of the dependency relationship is specifically described for convenience of explaining the dependency relationship, the sales package including the function packages is provided for installing or updating as described above.

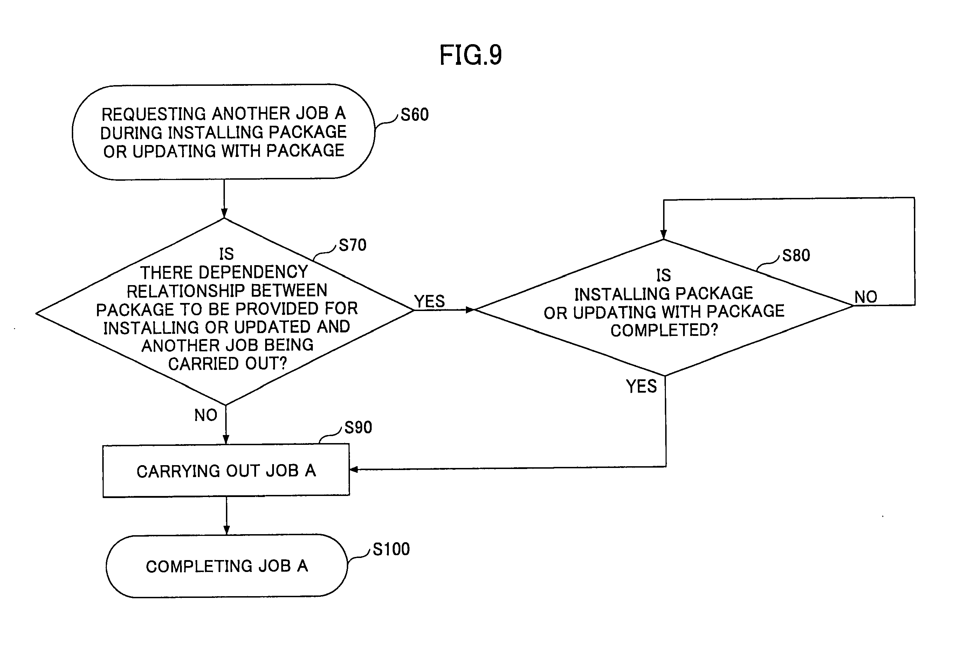

FIG. 9 is a flowchart in a case where another job is received while the function package is being installed initially or installed for updating the software such as the function package in the information processing apparatus. The flowchart of FIG. 9 corresponds to internal processing in the information processing apparatus 100 which is carrying out step S40 of "processing to install package or update with package". Although, in the embodiment, the function package having information of the dependency relationship is specifically described for convenience of explaining the dependency relationship, the sales package including the function packages is provided for installing or updating as described above.

The embodiment of the present invention provides an information processing apparatus which may install and update software even while the information processing apparatus performs an active job as long as the software is confirmed not to affect an active or idle job.

All examples and conditional language recited herein are intended for pedagogical purposes to aid the reader in understanding the principles of the invention and the concepts contributed by the inventor to furthering the art, and are to be construed as being without limitation to such specifically recited examples and conditions, nor does the organization of such examples in the specification relate to a showing of the superiority or inferiority of the invention. Although the embodiment of the present invention has been described in detail, it should be understood that various changes, substitutions, and alterations could be made thereto without departing from the spirit and scope of the invention.

This patent application is based on Japanese Priority Patent Application No. 2009-065295 filed on March 17, 2009, the entire contents of which are hereby incorporated herein by reference.

## Claims

1. An information processing apparatus on which plural software packages are installed, and a processing result obtained by one package of the plural software packages is provided to be used by another package of the plural software packages, the information processing apparatus comprising:
an installing unit configured to install an installing software package on the information processing apparatus to become a part of the plural software packages;
a software updating unit configured to update the plural software packages with an updating software package; and
a dependency relationship determination unit configured to determine existence of a dependency relationship between the installing software package or one of the plural software packages that are to be updated by the updating software package and any one of the plural software packages that is running when the installing software package or the one of the plural software packages that is to be updated by the updating software package uses the processing result of the any one of the plural software packages that is running, and non-existence of any dependency relationship when the installing software package or the one of the plural software packages that is to be updated by the updating software package does not use the processing result of the any one of the plural software packages that is running,
wherein when the dependency relationship determination unit determines the non-existence of any dependency relationship, the installing unit installs the installing software package or the one of the plural software packages is updated by the updating software package.

2. The information processing apparatus according to claim 1,
wherein when the information processing apparatus receives a processing request while the installing unit is installing the installing software package or the one of the plural software packages is being updated by the updating software package, the dependency relationship determination unit determines the existence or the non-existence of the dependency relationship between the installing software package being installed or the one of the plural software packages being updated by the updating software package and the any one of the plural software packages that is running, and
when the non-existence of any dependency relationship is determined by the dependency relationship determination unit the information processing apparatus carries out a process requested in the processing request.

3. The information processing apparatus according to claim 1,
wherein the dependency relationship determination unit determines existence of a dependency relationship between the installing software package or the one of the plural software packages that are to be updated by the updating software package and any one of the plural software packages that is ready and waiting when the installing software package or the one of the plural software packages that are to be updated by the updating software package uses a processing result of the any one of the plural software packages that is ready and waiting, or non-existence of any dependency relationship when the installing software package or the one of the plural software packages that is to be updated by the updating software package does not use the processing result of the any one of the plural software packages that is ready and waiting.

4. An information processing method carried out by an information processing apparatus on which plural software packages are installed, and a processing result obtained by one package of the plural software packages is provided to be used by another package of the plural software packages, the information processing method comprising:
installing, by an installing unit, an installing software package on the information processing apparatus to become a part of the plural software packages;
updating, by a software updating unit, the plural software packages with an updating software package; and
determining, by a dependency relationship determination unit, existence of a dependency relationship between the installing software package or one of the plural software packages that are to be updated by the updating software package and any one of the plural software packages that is running when the installing software package or the one of the plural software packages that is to be updated by the updating software package uses the processing result of the any one of the plural software packages that is running, and non-existence of any dependency relationship when the installing software package or the one of the plural software packages that is to be updated by the updating software package does not use the processing result of the any one of the plural software packages that is running,
wherein when the dependency relationship determination unit determines the non-existence of any dependency relationship, the installing unit installs the installing software package or the one of the plural software packages is updated by the updating software package.

5. A computer-readable storage medium storing a program for causing a computer included in an information processing apparatus, on which plural software packages are installed and a processing result obtained by one package of the plural software packages is provided to be used by another package of the plural software packages, to execute an information processing method, the information processing method comprising:
installing, by an installing unit, an installing software package on the information processing apparatus to become a part of the plural software packages;
updating, by a software updating unit, the plural software packages with an updating software package; and
determining, by a dependency relationship determination unit, existence of a dependency relationship between the installing software package or one of the plural software packages that are to be updated by the updating software package and any one of the plural software packages that is running when the installing software package or the one of the plural software packages that is to be updated by the updating software package uses the processing result of the any one of the plural software packages that is running, and non-existence of any dependency relationship when the installing software package or the one of the plural software packages that is to be updated by the updating software package does not use the processing result of the any one of the plural software packages that is running,
wherein when the dependency relationship determination unit determines the non-existence of any dependency relationship, the installing unit installs the installing software package or the one of the plural software packages is updated by the updating software package.
